(19) Europäisches Patentamt
European Patent Office
Office européen des brevets

(11) Publication number: **0 369 332 A2**

(12) **EUROPEAN PATENT APPLICATION**

(21) Application number: **89120824.1**

(22) Date of filing: **10.11.89**

(51) Int. Cl.5: **G11B 15/61, G11B 15/665**

(30) Priority: **14.11.88 US 270239**

(43) Date of publication of application: **23.05.90 Bulletin 90/21**

(84) Designated Contracting States: **AT CH DE FR GB IT LI NL SE**

(71) Applicant: **R-BYTE, INC.**
**2199 Zanker Road**
**San Jose, CA. 95131(US)**

(72) Inventor: **Feinberg Howard, Alan**
**6209 Blossom Avenue**
**San Jose, CA. 95123(US)**
Inventor: **Yang Shih-Ming**
**10160 North Blaney Avenue**
**Cupertin, CA. 95014(US)**

(74) Representative: **Sparing - Röhl - Henseler**
**Patentanwälte**
**Rethelstrasse 123 Postfach 14 02 68**
**D-4000 Düsseldorf 1(DE)**

(54) **Tape guidance arrangement.**

(57) A tape guidance arrangement is provided for positioning tape in contact with a recording and/or reproducing apparatus. The tape guidance arrangement comprises at least two tape guidance pins rigidly mounted on a stationary support plate positioned in proximity to the tape recording and/or reproducing transducer.

36
45
48
35
41
40
15'
42
37
10
45
34
48
36
44

FIG.–2



Xerox Copy Centre

The present invention relates generally to a tape guidance arrangement for use in conjunction with a tape recording and/or reproducing apparatus. The present invention relates, more specifically, to an arrangement for positioning tape in contact with or in proximity to a recording and/or reproducing transducer, and is particularly suitable for use with a digital audio tape (DAT) recording and/or reproducing apparatus.

Numerous devices utilize tape having various formats for recording and/or reproducing computer data, video and audio material. A length of tape is typically anchored to and wound on tape supply and take-up reels and enclosed in a protective cassette. An access portion of tape extends between the supply and take-up reels and is generally threaded around suitable guides to provide an aligned tape access portion in proximity to one peripheral edge of the tape cassette. Various types of video and audio tape cassettes having standardized cassette configurations are well known in the art.

Some types of tape recording and/or reproducing apparatus are arranged so that the tape remains in its initial position within the cassette during operation, while recording heads, reproducing heads, erasing heads and the like are manipulated to contact the tape as it is wound between the supply and take-up reels within the cassette. With other types of tape formats, the tape is withdrawn from its initial position within the cassette and positioned at a stationary recording and/or reproducing transducer. The DAT format may be classified in this second category of tape formats, wherein the tape is withdrawn from the cassette and positioned in contact with the helical scanning recording and/or reproducing drum during operation. The tape is returned to its initial position within the cassette after the recording and/or reproducing function has been completed.

Standardized design and dimensional parameters of DAT cassette arrangements are well known in the art. The supply and take-up reels are driven by rotatable drive shafts of a recording and/or reproducing apparatus, and a tape reel locking mechanism is generally provided to maintain the access portion of the magnetic tape in a moderately taut condition extending along the inner peripheral edge of the cassette when the cassette is not in operation. In addition, a rotatable lid member is mounted at the inner peripheral edge of the cassette to protect the access portion of the tape when it is not in operation and to provide access to the tape during operation.

Means for recording information on DAT and for reproducing information pre-recorded on DAT are well known in the art. Helical scan recording drums are typically employed for the recording function, while sandwich contact magnetic transfer techniques are typically used for reproduction. Like other types of magnetic tape apparatus, insertion of a DAT cassette into a cassette carriage and drive assembly typically aligns and anchors the cassette by insertion of datum pins mounted on the cassette carriage or a frame into datum pin apertures provided in the cassette. In addition, during insertion of the DAT cassette into a cassette carriage, the rotatable lid member of the cassette is pivoted to provide access to the tape, and the access portion of the DAT is positioned in a tape withdrawal and positioning condition. In this position, tape guide posts carrying tape guide rollers are typically positioned within the cassette behind the tape, and subsequent movement of the tape guide rollers causes withdrawal of the tape from within the cassette and positions the tape in contact with or in proximity to the recording and/or reproducing drum.

All tape recording and/or reproducing apparatus of the type to which this invention is most pertinent make use of some type of mechanisms to accept, hold and open the tape cassette, extract the tape from the cassette and present it to the read/write transducer, and provide drive means for moving the tape past the transducer. There are many known systems in the art for performing these functions.

The present invention relates to the specific task of aligning tape accurately and repeatably in relation to the read/write transducer.

At least two tape guidance pins are typically provided in conjunction with the tape guidance posts and tape guide rollers for positioning the tape in contact with the recording and/or reproducing apparatus. In DAT and other helical scan devices, the tape guidance pins are mounted at a compound angle to the drum spin axis, and their function is to properly align the DAT or other tape for contacting a helical recording and/or reproducing drum. It is essential that the tape guidance pins are consistently and precisely positioned in their final operating position to properly align the tape with the surface of the recording and/or reproducing drum to provide accurate recording and/or reproduction.

In prior art apparatus, the tape guidance pins are generally mounted on an assembly with the tape guidance posts for movement along predetermined slot paths during withdrawal and positioning of the tape. Alternatively, the tape guidance pins may be mounted independently from the tape guidance posts, but they are mounted for movement along a predetermined path during withdrawal and positioning of the tape. Movement of the tape guidance pins is generally accomplished by operative engagement with motorized drive means.

Movement of the tape guidance pins is undesirable, however, since consistent and precise positioning in the final operating position is difficult to achieve when each operating cycle requires realignment and positioning of the tape guidance pins.

Accordingly, it is an objective of the present invention to provide a tape guidance arrangement which assures consistent and precise placement of tape guidance pins in their final, operating position.

The tape guidance arrangement of the present invention includes at least two tape guidance pins rigidly mounted on a stationary support plate which also mounts the tape recording and/or reproducing transducer. According to a preferred embodiment, the recording or reproducing drum is mounted on a drum support plate, and tape guidance pins are rigidly mounted on the drum support plate in proximity to the tape recording and/or reproducing drum so that there is no change in their relative position during the recording and/or reproducing operations. The support plate is preferably rigidly mounted to a base plate or between side walls of a housing so that it remains stationary during the tape recording and/or reproducing operation. The tape is withdrawn from a tape cassette and conveyed, by means of tape guide rollers or the like, into contact with the tape guidance pins and the tape recording and/or reproducing drum.

The above-mentioned and additional features of the present invention and the manner of obtaining them will become apparent, and the invention will be best understood by reference to the following more detailed description read in conjunction with accompanying drawings, in which:

Fig. 1 shows a perspective view of a helical scan tape recording and/or reproducing drum mounted on a stationary drum support plate with tape guidance pins rigidly mounted on the stationary drum support plate; and

Fig. 2 shows a perspective view of a tape cassette counted in a tape recording and/or reproducing apparatus vith the tape withdrawn and positioned in an operating position wherein the tape contacts the tape guidance pins, and is in proximity to or in contact with the recording and/or reproducing drum.

The tape guidance arrangement of the present invention is suitable for use with tape recording and/or reproducing apparatus wherein a tape cassette is mounted in a cassette carriage, and the tape is withdrawn from its initial position within the cassette and positioned in proximity to or in contact with the recording drum or reproducing apparatus. The tape guidance arrangement is particularly suitable for use with digital audio tape (DAT) cassettes and DAT recording and/or reproducing apparatus, but it is not limited to this application.

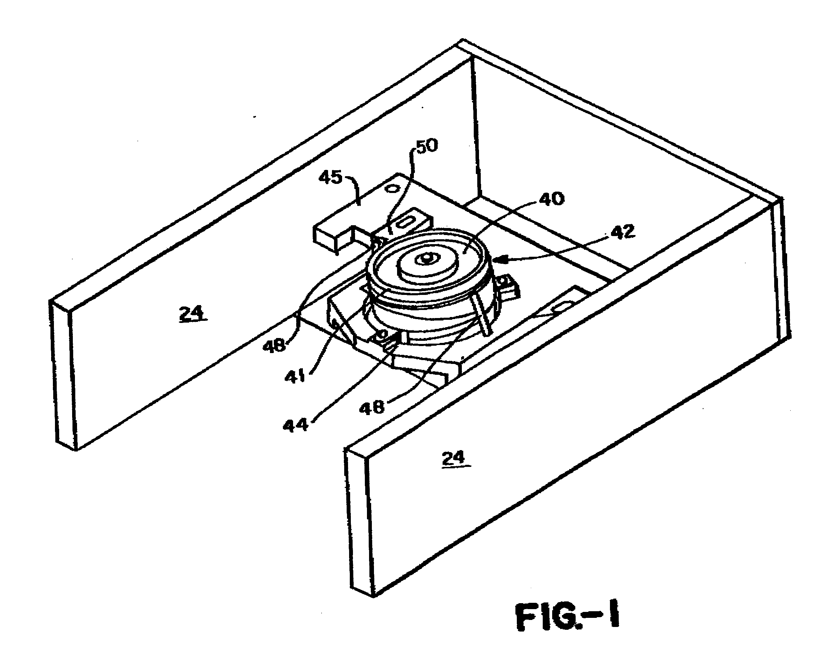

Fig. 1 shows a perspective view of tape recording and/or reproducing drum 40 mounted on drum support plate 42. The tape cassette, the cassette carriage and other mechanisms forming part of the tape recording and/or reproducing apparatus have been deleted from Fig. 1 to clearly illustrate the tape guidance arrangement. Drum support plate 42 is mounted between housing side walls 24 so that recording and/or reproducing drum 40 and drum support plate 42 remain stationary during operation of the recording and/or reproducing apparatus.

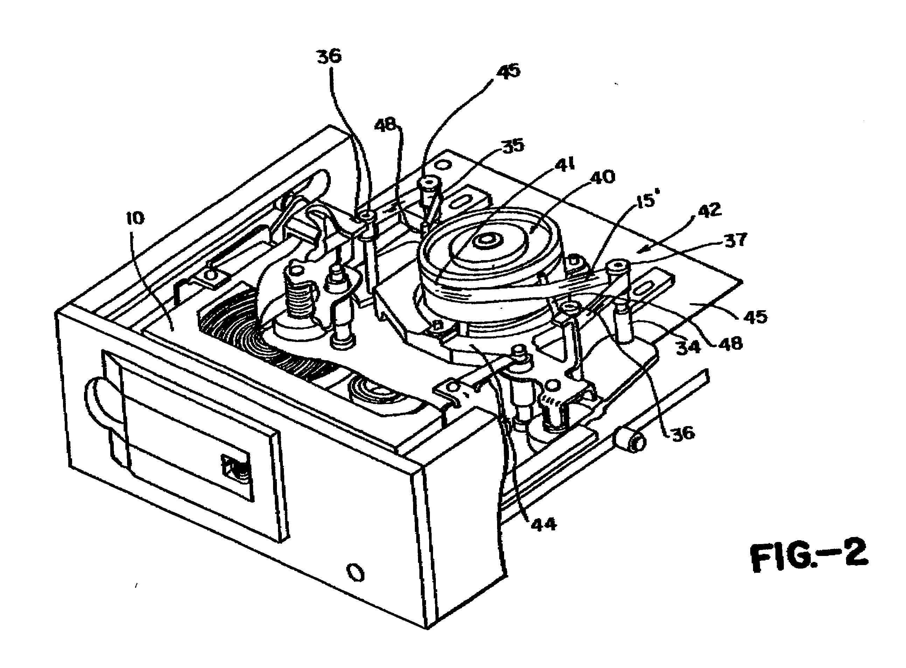

Fig. 2 illustrates an exemplary tape recording and/or reproducing apparatus, including tape cassette 10 mounted in a cassette carriage, with an access portion 15′ of the magnetic tape withdrawn and positioned in contact with recording and/or reproducing drum 40 for operation in the recording or reproduction mode. Portions of tape cassette 10, the cassette carriage, and the assembly housing have been deleted to more clearly illustrate the tape guidance arrangement of the present invention.

Drum support region 44 of the drum support plate is preferably generally rectangular, having dimensions at least slightly larger than recording and/or reproducing drum 40 so that peripheral surfaces of the drum support region project outwardly from the recording and/or reproducing drum. This preferred design of drum support plate 42 permits attachment of tape guidance pins 48 directly to the drum support plate, or machining of the tape guidance pins in one piece with the drum support plate.

Tape guidance pins 48 preferably comprise substantially cylindrical members which are rigidly mounted on drum support plate 42. As illustrated in Figs. 1 and 2, tape guidance pins 48 are mounted at a compound angle with respect to the drum spin axis, indicated by dotted line 50. Precise angular orientation of tape guidance pins 48 is critical to achieve proper functioning of the recording and/or reproducing apparatus, since the tape guidance pins serve to align the tape withdrawn from a tape cassette at an angle to the drum spin axes for recording and/or playing on a helical drum. The precise angular orientation of tape guidance pins 48 is determined by mathematical formulae which are well known in the art. As shown in Figs. 1 and 2, tape guidance pins 48 are arranged at corresponding locations on either side of and generally behind frontal circumferential contact section 41 of recording and/or reproducing drum 40.

Fig. 2 illustrates a tape recording and/or reproducing apparatus including the tape guidance arrangement of the present invention in the final, operating position wherein a portion of the magnetic tape is brought into contact with or positioned in proximity to frontal circumferential section 41 of recording and/or reproducing drum 40. In the operating position, the access portion 15′ of the magnetic tape is fully withdrawn from tape cassette 10, and is guided around tape guide rollers 35 and 37. Tape guide rollers 35 and 37 are positioned behind, or inwardly from frontal circumferential surface 41 of the recording and/or reproducing drum 40, and tape guidance pins 48 are rigidly mounted at a position intermediate tape guide rollers 35 and 37 and frontal circumferential surface 41. As a result of this arrangement, the magnetic tape extending between the pair of tape guide rollers 35 and 37 is brought into contact with tape guidance pins 48 to align the tape at an angular orientation, and the magnetic tape extending between tape guidance pins 48 is brought into contact with or positioned in proximity to the front circumferential surface of the recording and/or reproducing drum 40. Activation of an interlock switch or the like may then initiate the recording or reproduction function.

It is an important feature of the tape guidance arrangement of the present invention that the tape guidance pins are rigidly mounted to a component which remains stationary during the operating cycle of the recording and/or reproducing apparatus. The tape guidance pins consequently remain stationary during the operating cycle of the recording and/or reproducing assembly, and precise angular alignment of the tape to conform to the helical recording drum or the like is thus guaranteed.

While in the foregoing specification this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. A tape guidance arrangement for aligning tape in proximity to or in contact with a tape recording and/or reproducing drum apt to be driven to rotate about a spin axis having a given orientation comprising:
two tape guidance pins rigidly mounted on a stationary support plate and positioned in proximity to the tape recording and/or reproducing drum said tape guidance pins being aligned at a compound angle with respect to the spin axis of the tape recording and/or reproducing drum.

2. A tape guidance arrangement according to Claim 1, wherein the recording and/or reproducing drum is mounted on a drum support plate, and said tape guidance pins are rigidly mounted on said drum support plate.

3. A tape guidance arrangement according to Claim 2, wherein said drum support plate includes a drum support region, having dimensions at least slightly larger than the tape recording and/or reproducing drum, and said tape guidance pins are mounted on said drum support region.

4. A tape guidance arrangement according to Claim 3, wherein the tape recording and/or reproducing drum has a frontal tape contact section, and said tape guidance pins are rigidly mounted at corresponding locations on either side of and generally behind said frontal tape contact section.

5. A tape guidance arrangement according to Claim 4, wherein said tape guidance pins are machined to be fixed at an angle relative to said drum.

6. A tape guidance arrangement for aligning digital audio tape in proximity to or in contact with a tape recording and/or reproducing drum comprising:
two tape guidance pins rigidly mounted on a stationary support plate and positioned in proximity to the digital audio tape recording and/or reproducing apparatus, said tape guidance pins being aligned at a compound angle with respect to the spin axis of the digital audio tape recording and/or reproducing drum.

7. In a tape reproducing and/or recording apparatus wherein an access portion of tape is withdrawn from a tape cassette by at least two tape guidance posts and positioned in an operating position in proximity to or in contact with a tape recording and/or reproducing drum, and said tape is additionally brought into contact with said drum at a compound angle with respect to or in contact with the recording and/or reproducing drum, the improvement comprising rigidly mounted tape guidance means on a stationary support plate in proximity to said tape recording and/or reproducing drum.

8. In a tape reproducing and/or recording apparatus according to Claim 7, the improvement further comprising providing said tape guidance means machined to be fixed at an angle relative to said drum.

42
40
50
45
48
41
44
48
24
24

FIG.–1

10
36
48
45
35
41
40
15'
37
42
34
48
45
36
44

FIG.—2